(19) **Europäisches Patentamt**
**European Patent Office**
**Office européen des brevets**

(11) **EP 2 305 460 B1**

(12) **EUROPÄISCHE PATENTSCHRIFT**

(45) Veröffentlichungstag und Bekanntmachung des Hinweises auf die Patenterteilung:
**23.05.2012 Patentblatt 2012/21**

(51) Int Cl.:
**B32B 27/20** *(2006.01)*    **B32B 27/36** *(2006.01)*
**B41M 5/26** *(2006.01)*

(21) Anmeldenummer: **10010008.0**

(22) Anmeldetag: **21.09.2010**

(54) **Mehrschichtige, transparente Polyesterfolie**

Transparent multi-layer polyester film

Feuille de polyester multicouche transparente

(84) Benannte Vertragsstaaten:
**DE FR GB IT LU**

(30) Priorität: **25.09.2009 DE 102009042767**

(43) Veröffentlichungstag der Anmeldung:
**06.04.2011 Patentblatt 2011/14**

(73) Patentinhaber: **Mitsubishi Polyester Film GmbH**
**65203 Wiesbaden (DE)**

(72) Erfinder:
• **Kolar, Petr, Dr.**
  **65760 Eschborn (DE)**

• **Bennett, Cynthia, Dr.**
  **55232 Alzey (DE)**
• **Kliesch, Holger, Dr.**
  **65462 Ginsheim-Gustavsburg (DE)**
• **Bröder, Dirk, Dr.**
  **55444 Schweppenhausen (DE)**

(74) Vertreter: **Schweitzer, Klaus et al**
**Plate Schweitzer Zounek**
**Patentanwälte**
**Rheingaustrasse 196**
**65203 Wiesbaden (DE)**

(56) Entgegenhaltungen:
**WO-A1-2004/012515**

**Beschreibung**

Die Erfindung betrifft eine lasermarkierbare, mindestens zweischichtige, transparente (> 75 % Transparenz), biaxial orientierte Polyesterfolie umfassend eine Basisschicht (B), die einen Polyester und Kupfer(II)hydroxidphosphat als Laserlicht-absorbierendes Additiv enthält, sowie mindestens eine Deckschicht (A). Die Erfindung betrifft weiterhin ein Verfahren zur Herstellung der Folie und ihre Verwendung.

Transparente, orientierte Polyesterfolien sind bekannt.

EP-A-1 920 918 beschreibt eine mehrschichtige weiße Polyesterfolie, die lasermarkierbar ist. Die Folien weisen eine Transparenz von kleiner 60 % auf, wobei in den Ausführungsbeispielen die Transparenzwerte unterhalb von 30 % liegen. Die laseraktiven Additive sind in dieser Schrift beschrieben als Metall- oder Halbmetalloxide, insbesondere Oxide der Elemente der fünften Periode der dritten, vierten und fünften Hauptgruppe des Periodensystems, und besonders bevorzugt als Mischoxide aus dieser Gruppe. Als geeignet sind insbesondere Antimonoxide, insbesondere $Sb_2O_3$, Mischoxide von $Sb_2O_3$ und Zinnoxid, z. B. Mark-it® von Engelhard (USA), andere dotierte Zinnoxide wie Mischoxide von Indium und Zinn (ITO) oder auch gemischte Zinnoxide und Fluoride, verschiedene Kupfersalze, insbesondere Kupferphosphate, hier insbesondere Mischphosphate von Kupfer und Zinn bzw. von Kupfer und Antimon, weiterhin Molybdän-(IV)-oxid, Wismutoxide, Lanthanborate und Manganoxide sowie Mischoxide von Kupfer und Chrom bzw. Mischungen der genannten Oxide, Phosphate usw. beschrieben. Beispielhaft ausgeführt wurden Folien mit dotiertem Glimmer (Lazerflair®) und nanoscaligem Indiumzinnoxid.

Die EP-A-0 764 683 beschreibt lasermarkierbare Polymerformmassen, die unter anderem Kupferhydroxidphosphat als laseraktives Pigment (Laseradditiv) enthalten können. Keine der genannten Schriften enthält Hinweise, wie besonders transparente biaxial orientierte Polyesterfolien erhalten werden können. EP-A-1 920 918 beschreibt sogar explizit undurchsichtige Polyesterfolien, und EP-A-0 764 683 beschreibt lediglich Formassen, die u. a. für streckorientierte Polyesterfolien vollkommen ungeeignete Glasfaseranteile (lässt sich nicht Strecken) oder große Mengen an Antimontrioxid (macht trüb und verringert die Transparenz stark) enthalten. Polyester mit Füllstoffen verändern ihre Transparenz durch Ausbildung von Voids während der Streckorientierung maßgeblich. Ein Hinweis zum Erhalt der Transparenz von biaxial gestreckten Polyesterfolien ist dieser Schrift nicht zu entnehmen.

Eine hohe Transparenz ist aber in vielen Anwendungen zwingend notwendig, insbesondere dann, wenn die Folie im Konterdruck bedruckt werden soll bzw. wenn sie in Identitätskarten (Ausweisen) aller Art verwendet werden soll. Das gleiche gilt für Anwendungen im Etikettenbereich.

Aufgabe der vorliegenden Erfindung war es daher, eine mindestens zweischichtige Polyesterfolie bereitzustellen, die sich gegenüber den im Stand der Technik bekannten weißen Polyesterfolien durch überlegene Transparenz bei gleichzeitig guter Markierbarkeit bei Laserwellenlängen zwischen 350 und 1500 nm auszeichnet.

Die Aufgabe wird erfindungsgemäß durch die Bereitstellung einer lasermarkierbaren, transparenten, coextrudierten, biaxial orientierten Polyesterfolie mit einer Basisschicht (B) und mindestens einer Deckschicht (A) gelöst, wobei die Folie eine Transparenz von größer/gleich 75 % besitzt und wobei die Basisschicht (B) eine Menge im Bereich von 0,2 bis 6 Gew.-% Kupfer(II)hydroxidphosphat als Laserenergie absorbierendes Pigment enthält.

Der Polymeranteil der Basisschicht B und der übrigen Schichten der Folie besteht bevorzugt zu mindestens 90 Gew.-% aus einem thermoplastischen Polyester. Dafür geeignet sind unter anderem Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroximethylcyclohexan und Terephthalsäure (= Poly(1,4-cyclohexandimethylen-terephthalat, PCDT) und Polyester aus Isophthalsäure und Ethylenglykol sowie aus beliebigen Mischungen der genannten Carbonsäuren und Diole. Besonders bevorzugt sind Polyester, die zu mindestens 70 Mol-%, bevorzugt mindestens 75 Mol-% und insbesondere mindestens 80 Mol-% aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren.

Geeignete andere aliphatische Diole sind beispielsweise Diethylenglykol, Triethylenglykol, aliphatische Glykole der allgemeinen Formel $HO-(CH_2)_n-OH$, wobei n bevorzugt kleiner 10 ist. Es hat sich dabei als günstig erwiesen, wenn weniger als 96 Mol-%, insbesondere weniger 93 Mol%, des Polyesters aus Ethylenglykol- und Terephthalsäure-Einheiten oder aus Ethylenglykol- und Naphthalin-2,6-dicarbonsäure-Einheiten bestehen. Die restlichen Monomere werden in diesem Fall bevorzugt aus Isophthalsäure, Cylohexandimethanol und Dieethylenglykol ausgewählt. Solche Polyester führen zu einer höheren Transparenz und kleineren Trübung der biaxial gestreckten Folie als Polyester mit einem höheren Anteil an Ethylenglykol- und Terephthalsäure-Einheiten oder aus Ethylenglykol- und Naphthalin-2,6-dicarbonsäure-Einheiten. Bevorzugt enthält die Folie mindestens 0,5 Gew.-% und besonders bevorzugt mindestens 1 Gew.-% Diethylenglykol, und bevorzugt enthält die Folie mindestens 1 Gew.-% Isophthalsäure, besonders bevorzugt mindestens 2 Gew.-% und idealerweise mindestens 4 Gew.-% Isophthalsäure. Wenn der Anteil an sonstigen Monomeren deutlich höher wird als 20 Mol-% ist die Folie in der Regel nicht mehr kristallisierbar, und es kommt zu hohen Schrumpfwerten.

Die Folie enthält erfindungsgemäß eine Menge von 0,2 bis 6 Gew.-% Kupfer(II)hydroxid-phosphat als Laserenergie-absorbierendes Pigment in der Basisschicht. Das Kupfer(II)hydroxidphosphat hat dabei die allgemeine Sum-

menformel:

$$Cu(II)_x(OH)_y(PO_z)_n \qquad \text{Formel I}$$

wobei x zwischen 2 und 6 liegt und bevorzugt 4 ist,
y zwischen 1 und 4 liegt und bevorzugt 2 ist,
z zwischen 3 und 4 liegt und bevorzugt 4 ist und
n zwischen 1 und 4 liegt und bevorzugt 2 ist.

In der Basisschicht (B), aber auch in anderen, zusätzlichen Schichten der Folie können andere, von Formel I verschiedene Laseradditive enthalten sein. Die Folie kann zusätzlich bis zu 2 Gew.-% an weiteren Laseradditiven enthalten. Weitere Laseradditive sind beispielhaft in EP-A-1 920 918 genannt. Andere Additive als die in Formel I genannten führen aber in der Regel zu einer geringeren Schwarzfärbung bei gleicher Konzentration wie die nach Formel I und führen weiterhin zu einer höheren Trübung und geringeren Transparenz. So war es z. B. nicht möglich, mit Lazerflair 820 (Merck KGaA Darmstadt, DE, dotierter Glimmer) den gleichen Schwärzungsgrad in einer 50 μm PET-Folie zu erreichen wie mit Verbindungen nach Formel I und gleichzeitig eine Transparenz von größer/gleich 75 % einzustellen. Daher werden in einer bevorzugten Ausführungsform weniger als 1 Gew.-%, bezogen auf das Gesamtgewicht der Folie, an sonstigen Laseradditiven eingesetzt und besonders bevorzugt weniger als 0,5 Gew.-% und ganz besonders bevorzugt gar keine weiteren Laseradditive eingesetzt (d. h. es werden nur solche der Formel I eingesetzt).

Das Kupfer(II)hydroxidphosphat ist zwingend in der Basisschicht vorhanden, kann jedoch auch (zusätzlich) in anderen, weiteren Schichten der Folie vorhanden sein, wobei die dem Laser zugewandte Schicht (A) am wenigsten, bevorzugt kein Kupfer(II)hydroxidphosphat enthält (s. weiter unten). Das Kupfer(II)hydroxidphosphat wird zweckmäßigerweise in einer Menge zugegeben, die abhängig ist von der Gesamtdicke aller Kupfer(II)hydroxidphosphat enthaltenden Folienschichten. Die Gesamtmenge an Kupfer(II)hydroxidphosphat in Gew.-% in allen Kupfer(II)hydroxidphosphat enthaltenden Folienschichten beträgt dabei bevorzugt

$$C_{nl} = C_I \cdot d^a \qquad \text{Gleichung 1}$$

mit

$d$ = Gesamtschichtdicke aller Folienschichten (Einheit: μm), die eine Verbindung der Formel I enthalten
$a$ = empirischer Exponent: a = 0,6864
$C_I$ = Gesamtkonzentration aller Verbindungen der Formel I in den Verbindungen der Formel I enthaltenden Schichten der Folie (Einheit: Gew.-%)
$C_{nl}$ = normierte Gesamtkonzentration aller Verbindungen der Formel I in den Verbindungen der Formel I enthaltenden n Schichten der Folie (Einheit: Gew.-% · (μm)$^a$).

Enthalten mehrere Folienschichten ein Laseradditiv gemäß Formel I, dann berechnet sich

$$d = \sum_{i=1}^{n} d_i$$

und

$$C_I = \sum_{i=1}^{n} C_i \cdot d_i / d$$

mit

$d_i$ = Schichtdicke der Laseradditiv enthaltenden Schicht $i$ (Einheit: μm)
$C_i$ = Konzentration des Laseradditivs in Schicht $i$ (Einheit: Gew.-%)
$n$ = Anzahl aller Laseradditiv enthaltenden Schichten in der Folie.

Üblicherweise liegt die Untergrenze von $C_{nl}$ bei größer/gleich 4 Gew.-% · (μm)$^a$, bevorzugt bei größer/gleich

8 Gew.-% • $(\mu m)^a$, besonders bevorzugt bei größer/gleich 14 Gew.-% • $(\mu m)^a$, und idealerweise bei größer/gleich 22 Gew.-% • $(\mu m)^a$.

Üblicherweise liegt die Obergrenze von $C_{nl}$ bei kleiner/gleich 75 Gew.-% • $(\mu m)^a$, bevorzugt bei kleiner/gleich 55 Gew.-% • $(\mu m)^a$, besonders bevorzugt bei kleiner/gleich 42 Gew.-% . $(\mu m)^a$, und idealerweise bei kleiner/gleich 35 Gew.-% • $(\mu m)^a$.

Bei einer zu hohen Beladung mit Laseradditiv kommt es zu einer zu starken Erwärmung der Schicht/Schichten. Die dabei entstehende Hitze kann zur Blasenbildung und schlimmstenfalls zur Bildung eines Loches in der Folie führen. Zudem leidet bei zu hoher Beladung die Qualität der Markierung. Zu wenig Laseradditiv in der Schicht/den Schichten führt bei der Lasermarkierung zu einer zu geringen Erwärmung und einer nicht ausreichenden Schwärzung. Je größer die Menge an Pigment, desto größer wird auch die Trübung und desto geringer die Transparenz.

Es hat sich als günstig erwiesen, wenn keine Schicht unabhängig von ihrer Dicke mehr als 10 Gew.-% Laseradditiv enthält, weil sonst eine zu starke lokale Erwärmung eintritt. Es hat sich zudem als günstig erwiesen, wenn keine Schicht, die Laseradditiv enthält, weniger als 0,02 Gew.-% Laseradditiv enthält, weil diese geringe Menge an Additiv in dem Fall nicht mehr zur Schwärzung der Folie gemäß seiner nach dem Gesamtgewichtsanteil erwarteten Weise beiträgt.

Die Gesamtschichtdicke aller Verbindungen der Formel I enthaltenden Schichten in der erfindungsgemäßen Folie ist zweckmäßigerweise 6 bis 250 $\mu m$, wobei 8 bis 75 $\mu m$ und insbesondere 15 bis 65 $\mu m$ bevorzugt sind.

Die Verbindungen der Formel I werden in Form von Partikeln zugegeben. Diese Partikel haben zweckmäßigerweise eine mittlere Teilchengröße $d_{50}$ von kleiner 10 $\mu m$, bevorzugt liegt die mittlere Teilchengröße bei kleiner 7 $\mu m$ und insbesondere bei kleiner 4 $\mu m$, gemessen mittels Laserdiffraktion. Größere Partikel als 10 $\mu m$ sind ungünstig für die Produzierbarkeit der Folien, es besteht dann eine erhöhte Gefahr von Folienabrissen. Unterhalb von 10 $\mu m$ führt jede Abnahme der Teilchengröße zu einer Verringerung der Trübung und einer Erhöhung der Transparenz, was für eine gute Lasermarkierung wünschenswert ist. Kleinere Teilchen verbessern weiterhin die Auflösung der Lasermarkierung. Teilchengrößen unterhalb von $d_{50} = 75$ nm sind weniger bevorzugt, da der erhöhte Herstellungsaufwand und der Aufwand bei der

Einarbeitung der Partikel zu keiner erkennbaren Verbesserung der Folieneigenschaften führt.

Die erfindungsgemäße Folie ist mindestens zweischichtig (Basisschicht B und Deckschicht A), bevorzugt dreischichtig (Basisschicht B und Deckschichten A und C) und gegebenenfalls vielschichtig mit jeweils weiteren Zwischenschichten zwischen den Deckschichten A und C und der Basisschicht B.

Die dem Laser zugewandte Deckschicht A der Folie enthält bevorzugt weniger als 1 Gew.-% und besonders bevorzugt weniger als 0,5 Gew. %, besser weniger als 0,2 Gew.-% und idealerweise gar keines der laseraktiven Pigmente. Je geringer der Anteil an laseraktivem Pigment in dieser Deckschicht A ist, desto geringer wird die Beeinträchtigung der Folienoberfläche durch das Lasermarkieren, insbesondere werden Löcher in dieser Schicht so vermieden.

Die Deckschicht A ist mindestens 0,5 $\mu m$, bevorzugt mindestens 2 $\mu m$ und idealerweise mindestens 5 $\mu m$ dick. Je dicker die Deckschicht A ist, desto geringer ist die Beeinträchtigung der Folienoberfläche durch das Lasermarkieren, insbesondere werden Löcher in dieser Schicht so zuverlässig vermieden.

Zweckmäßigerweise ist die Deckschicht A dünner als 75 $\mu m$, bevorzugt dünner als 25 $\mu m$ und idealerweise dünner als 16 $\mu m$, weil eine dickere Deckschicht nicht mehr zur Funktionalität der Folie beiträgt und so unter Umständen die maximale in der Anwendung noch tolerierbare Gesamtfoliendicke überschritten wird.

Die dem Laserlicht abgewandte Deckschicht C enthält bevorzugt weniger als 5 Gew.-% und besonders bevorzugt weniger als 2 Gew. %, besser weniger als 0,2 Gew.-% und idealerweise wie Schicht A gar keines der erfindungsgemäßen laseraktiven Pigmente. Je geringer der Anteil an laseraktivem Pigment in dieser Deckschicht ist, desto geringer wird die Beeinträchtigung der Folienoberfläche durch das Lasermarkieren, insbesondere werden Löcher in dieser Schicht so vermieden.

Etwaige vorhandene Zwischenschichten enthalten bevorzugt ebenfalls laseraktive Pigmente in den oben angegebenen Mengen, bezogen auf das Gewicht der Schicht.

Eine oder beide Deckschichten A und/oder C sind in einer bevorzugten Ausführungsform siegelfähig, wobei die Siegelschicht/en bevorzugt mit den übrigen Schichten coextrudiert wird/werden. Falls ein Copolyester für die Siegelschicht verwendet wird, dann hat dieser eine Zusammensetzung, die sich von der eingangs erwähnten bevorzugten Zusammensetzung des Polyesters für die Folie hinsichtlich der genannten Bereiche für die Gesamtmenge an Ethylenglykol- und Terephthalsäure-Einheiten und Naphthalin-2,6-dicarbonsäure-Einheiten unterscheidet; die übrigen Schichten der Folie liegen aber weiterhin innerhalb der genannten Grenzen. Geeignete Siegelschichten sind bekannt und beispielsweise in den folgenden Patentschriften beschrieben: US-A-2009/0061138, US-A-2009/0061137, WO-A-02/070606, EP-A-1 529 799, EP-A-1 380 414, EP-A-0 849 075. Die Folie mit Siegelschicht eignet sich hervorragend für die Einbringung in das Laminat für Identitätskarten aller Art. Die Siegelschicht enthält in einer besonders bevorzugten Ausführungsform der erfindungsgemäßen Folie kein Laseradditiv nach Formel I.

Alle Schichten können zusätzlich unabhängig voneinander übliche Additive wie beispielsweise Stabilisatoren und/oder Antiblockmittel enthalten. Bevorzugt werden diese Additive in den Deckschichten A und C eingesetzt. Diese können übliche Additive wie bspw. Stabilisatoren (z. B. Irganox®) und/oder Antiblockmittel wie $SiO_2$, Kaolin etc. enthalten. Die Additive werden in üblicher Weise dem Polymer bzw. der Polymermischung bereits vor dem Aufschmelzen zugesetzt. Als Stabilisatoren werden beispielsweise Phosphorverbindungen wie Phosphorsäure oder Phosphorsäureester eingesetzt.

Typische Antiblockmittel sind anorganische und/oder organische Partikel, beispielsweise kristalline oder amorphe Kieselsäure, Talk, Magnesiumcarbonat, Bariumcarbonat, Calciumsulfat, Lithiumphosphat, Calciumphosphat, Magnesiumphosphat, Aluminiumoxid, Aluminiumsilikate, LiF, Calcium-, Barium-, Zink- oder Mangan-Salze der eingesetzten Dicarbonsäuren, Titandioxid, Kaolin oder vernetzte Polystyrol- oder PMMA-Partikel.

Als Antiblockmittel können auch Mischungen von zwei und mehreren verschiedenen Antiblockmitteln oder Mischungen von Antiblockmitteln gleicher Zusammensetzung, aber unterschiedlicher Partikelgröße gewählt werden. Die Antiblockmittel und die Laseradditive können den einzelnen Schichten in den jeweils vorteilhaften Konzentrationen, z. B. als glykolische Dispersion während der Polykondensation oder über Masterbatche bei der Extrusion, zugegeben werden. Der Gehalt an Partikeln aller Art (ohne Berücksichtigung des Laseradditivs) ist üblicherweise in allen Schichten kleiner 4 Gew.-%, besser kleiner 3 Gew.-%, bevorzugt kleiner 1,5 Gew.-% und noch mehr bevorzugt kleiner 0,9 Gew.-%, ganz besonders bevorzugt ist ein Gehalt von kleiner 0,6 Gew.-%. Insbesondere der Gehalt von Partikeln mit einem $d_{50}$ von keiner als 1 µm ist erfindungsgemäß in jeder Schicht kleiner 2 Gew.-%, besser kleiner 1,5 Gew.-%, bevorzugt kleiner 0,75 Gew.-% und noch mehr bevorzugt kleiner 0,45 Gew.-%. Ganz besonders bevorzugt ist ein Gehalt kleiner 0,3 Gew.-%. Je kleiner der Gehalt an sonstigen Partikeln, desto höher ist die Transparenz der resultierenden Polyesterfolie. Zu wenig Partikel, insbesondere in den Deckschichten, kann aber zu einer schlechten Wickelbarkeit der Folie führen, und daher enthält in einer bevorzugten Ausführungsform mindestens eine der Deckschichten mindestens 0,1 Gew. % an Partikeln, wobei diese Partikel auch Laseradditive sein können, wenn dessen $d_{50}$ oberhalb von 1 µm liegt. Die Verwendung von Laseradditiv in den Deckschichten ist jedoch weniger bevorzugt was bereits vorstehend erläutert worden war.

Da die Folie in einer bevorzugten Anwendung (z. B. Identitätskarten) im Konterdruck bedruckt wird, hat es sich als günstig erwiesen, wenn die Folie eine ausreichende mechanische Festigkeit aufweist, um sich ohne Verdehnungen bedrucken zu lassen. Um diese Eigenschaft zu verbessern, hat es sich als günstig erwiesen, wenn die Folie einen E-Modul in von größer 2000 N/mm², bevorzugt von größer 3000 N/mm² und besonders bevorzugt > 3500 N/mm², in Längs- und Querrichtung aufweist. Die $F_5$-Werte (= Kraft bei 5 % Dehnung) liegen in einer üblichen Ausführungsform in Längs- und Querrichtung bei über 30 N/mm² und bevorzugt bei über 40 N/mm². Diese mechanischen Eigenschaften können beispielsweise durch geeignete biaxiale Streckorientierung der Folie erhalten werden (s. Verfahrensbeschreibung).

Die erfindungsgemäße Folie weist bei 150 °C einen Schrumpf in Längs- und Querrichtung von unter 20 %, bevorzugt unter 10 % und besonders bevorzugt von unter 3 %, auf. In dieser erfindungsgemäßen Ausführungsform weist die Folie weiterhin bei 100 °C eine Ausdehnung von weniger als 4 %, bevorzugt von weniger als 2 % und besonders bevorzugt von weniger als 0,5 %, auf. Diese Formstabilität kann beispielsweise durch geeignete Thermofixierung und Relaxation der Folie vor dem Aufwickeln erhalten werden (s. Verfahrensbeschreibung). Innerhalb der genannten Schrumpf/Ausdehnungsbereiche ist die Folie bei ausreichender Passergenauigkeit für die gewünschten Anwendungen bedruckbar.

In einer weiteren bevorzugten Ausführungsform ist die Folie mindestens einseitig mit einer Haftvermittlung für Druckfarben beschichtet. Als Beschichtungen eignen sich beispielsweise Acrylate oder Copolyester mit Sulfoisophthalsäuregehalten von mehr als 0,2 Gew.-%.

In einer bevorzugten Ausführungsform weist die Folie eine Trübung von unter 60 %, besonders bevorzugt eine Trübung von unter 50 % und idealerweise von unter 40 %, auf. Niedrige Trübung führt zu einem besonders strahlenden Eindruck von Druckfarben durch die Folie hindurch und lässt darunter liegendes Material besonders gut erkennen. Diese geringe Trübung kann z. B. dann erreicht werden, wenn die erfindungsgemäßen Anteile an Laseradditiv nicht überschritten werden. Zur Erreichung dieser niedrigen Trübungswerte ist es weiterhin günstig, wenn der Gehalt an sonstigen Partikeln (z. B. Antiblockmittel) die erfindungsgemäßen Bereiche nicht überschreitet.

Die Transparenz der Folien liegt bei größer 75 %, besser größer 79 %, idealerweise größer 82 %. Die hohe Transparenz kann erreicht werden, wenn die erfindungsgemäßen Anteile an Laseradditiv nicht überschritten werden. Zur Erreichung dieser Transparenzwerte ist es weiterhin günstig, wenn der Gehalt an sonstigen Partikeln (z. B. Antiblockmittel) die erfindungsgemäßen Bereiche nicht überschreitet.

Die erfindungsgemäßen Folien mit den Laseradditiven weisen einen leichten Grünstich auf. Es hat sich daher als günstig erwiesen, wenn den Folien ein Menge an Rotfarbstoff von kleiner als 0,1 Gew.-% zugegeben wird. Die genaue Zugabemenge richtet sich nach dem Gehalt an Laseradditiv und dem Extinktionskoeffizienten des Rotfarbstoffs und muss individuell nach dem gewünschten Farbeindruck eingestellt werden. Bei den Rotfarbstoffen hat sich FILESTER® Red GA von Ciba SC (Schweiz) (Solvent Red 135, C.I.Pigment No. 564120, CAS.Nr. 20749-68-2) als besonders günstig erwiesen.

Verfahren

Die Polyester-Matrixpolymere für die einzelnen Schichten der erfindungsgemäßen Folie werden durch Polykondensation hergestellt, entweder ausgehend von Dicarbonsäuren und Diol (sog. "PTA-Verfahren") oder auch ausgehend von den Estern der Dicarbonsäuren, vorzugweise die Dimethylester und Diol (sog. "DMT-Verfahren"). Gut geeignete Polyethylenterephthalate haben bevorzugt SV-Werte im Bereich von 600 bis 900 und Polyethylen-2,6-naphthalate von ca. 500 bis 800.

Die Laseradditive, anorganischen Partikel oder vernetzten organischen Partikel können bereits bei der Herstellung des Polyesters zugegeben werden. Hierzu werden die Partikel in Ethylenglykol dispergiert, gegebenenfalls gemahlen, dekantiert usw. und dem Reaktor entweder im (Um)-Esterungs- oder Polykondensationsschritt zugegeben. Bevorzugt kann alternativ ein konzentriertes partikelhaltiges oder additivhaltiges Polyester-Masterbatch mit einem Zweischneckenextruder hergestellt werden und bei der Folienextrusion mit partikelfreiem Polyester gemischt/verdünnt werden. Eine weitere Möglichkeit besteht darin, Partikel und Additive direkt bei der Folienextrusion in einem Zweischneckenextruder zuzugeben. Die letzten beiden Varianten sind insbesondere deswegen von Vorteil für die Zugabe der laserlichtabsorbierenden Pigmente, weil diese durch die Anwesenheit von Kupfer katalytische Aktivität in der Polyesterherstellung besitzen und zudem der Polykondensation abträglich Hydroxylgruppen einbringen und so die Polykondensation schwer beherrschbar machen.

Wenn Einschneckenextruder verwendet werden, dann hat es sich als besonders vorteilhaft erwiesen, die Polyester vorher zu trocknen. Bei Verwendung eines Zweischneckenextruders mit Entgasungszone kann auf den vorgeschalteten Trocknungsschritt verzichtet werden.

Es hat sich als vorteilhaft erwiesen, die laseraktives Material enthaltende Basisschicht B mit einem Zweischneckenextruder zu verarbeiten, da der Trocknungsschritt, welcher bei Einschneckenextrudern für die Verarbeitbarkeit vorteilhafterweise vorgeschaltet ist, zu einer Verfärbung des Polymers führen kann. Das gilt insbesondere dann, wenn der Basisschicht B ein Regenerat aus Folienverschnitt und Randstreifen zugeführt wird, da dieses Regenerat bereits einen oder mehrere Extrusionsschritte hinter sich hat. Um technische Probleme zu vermeiden, sollten Trocknertemperaturen oberhalb von 150 °C vermieden werden.

Zunächst wird das Polymere bzw. die Polymermischung der einzelnen Schichten in einem Extruder komprimiert und verflüssigt. Dann werden die Schmelzen in einer Mehrschichtdüse zu flachen Schmelzefilmen ausgeformt, übereinander geschichtet, durch eine Breitschlitzdüse gepresst und auf einer Kühlwalze und einer oder mehreren Abzugswalzen abgezogen, wobei die Folie abkühlt und sich zur Vorfolie verfestigt.

Die verfestigte Vorfolie wird biaxial streckorientiert, d. h. biaxial gestreckt. Die biaxiale Streckorientierung der Folie wird am häufigsten sequenziell durchgeführt. Dabei wird vorzugsweise erst in Längsrichtung (d. h. in Maschinenrichtung = MD-Richtung) und anschließend in Querrichtung (d. h. senkrecht zur Maschinenrichtung = TD-Richtung) gestreckt. Das Strecken in Längsrichtung lässt sich mit Hilfe zweier entsprechend dem angestrebten Streckverhältnis verschieden schnell laufender Walzen durchführen. Zum Querverstrecken benutzt man im Allgemeinen einen entsprechenden Kluppenrahmen.

Statt der sequenziellen Streckung ist auch eine simultane Streckung der Folie in einem Simultanstreckrahmen möglich, was aber technisch sehr aufwändig ist.

Die Temperatur, bei der die Streckorientierung durchgeführt wird, kann in einem relativ großen Bereich variieren und richtet sich nach den gewünschten Eigenschaften der Folie. Im Allgemeinen wird die Streckung in Längsrichtung in einem Temperaturbereich von 80 bis 130 °C (Aufheiztemperaturen 80 bis 130 °C) und in Querrichtung in einem Temperaturbereich von 90 °C zu Beginn der Streckung bis 140 °C ganz am Ende der Streckung durchgeführt. Das Längsstreckverhältnis liegt im Bereich von 2,0:1 bis 5,5:1, bevorzugt von 2,2:1 bis 5,0:1, insbesondere zwischen 2,7 und 3,7. Das Querstreckverhältnis liegt allgemein im Bereich von 2,4:1 bis 5,0:1, bevorzugt von 2,6:1 bis 4,5:1 und insbesondere zwischen 2,7 und 4. Zu niedrige Streckverhältnisse führen zu Folien mit niedrigen mechanischen Festigkeiten. Zu hohe Streckverhältnisse führen zwar zu Folien mit hohen E-Modulen, aber diese Folien weisen dann zu hohe Trübung und zu niedrige Transparenz auf.

Vor der Querstreckung können eine oder beide Oberfläche(n) der Folie nach den an sich bekannten Verfahren in-line beschichtet werden. Die In-line-Beschichtung kann beispielsweise zu einer verbesserten Haftung zwischen einer Metallschicht oder einer Druckfarbe und der Folie, zu einer Verbesserung des antistatischen Verhaltens oder des Verarbeitungsverhaltens der Folie führen. Wenn die äußeren coextrudierten Schichten keine anorganischen Partikel zur Verbesserung der Schlupf- und Wickelcharakteristik enthalten, dann kann an dieser Stelle zweckmäßig eine partikelhaltige Beschichtung aufgebracht werden.

Bei der nachfolgenden Thermofixierung wird die Folie über eine Zeitdauer von etwa 0,1 bis 10 s unter Spannung bei einer Temperatur von 150 bis 250 °C gehalten und zum Erreichen der bevorzugten Schrumpf- und Längungswerte um mindestens 1 %, bevorzugt mindestens 3 % und besonders bevorzugt mindestens 4 % in Querrichtung relaxiert. Diese Relaxation findet bevorzugt in einem Temperaturbereich von 150 ° bis 190 °C statt. Bevorzugt finden weniger als 25 % und mehr als 5 % der Gesamtrelaxation innerhalb der ersten 25 % der Relaxationszeit statt. Anschließend wird die Folie in üblicher Weise aufgewickelt.

Bei der Herstellung der Folie ist gewährleistet, insbesondere dann, wenn für die Basisschicht B ein Zweischnekkenextruder verwendet wird, dass das Regenerat in einer Konzentration von 20 bis 60 Gew.-%, bezogen auf das Gesamtgewicht der Folie, wieder der Extrusion zugeführt werden kann, ohne dass dabei die physikalischen und optischen Eigenschaften der Folie nennenswert negativ beeinflusst werden. D. h. es tritt keine Einfärbung durch Thermoabsorber und thermische Belastung auf.

Die erfindungsgemäße Folie zeichnet sich durch eine gute Lasermarkierbarkeit bei ausreichend hoher Transparenz für einen Konterdruck aus.

Zur Charakterisierung der Rohstoffe und der Folien wurden die folgenden Messmethoden benutzt:

**Lasermarkierbarkeit**

Mit einem $Nd:YO_4$-Beschriftungslaser Easy Mark II der Fa. Rofin-Sinar Laser GmbH in Bergkirchen (1064 nm) werden Testraster auf die Folien mit den folgenden Parametern geschrieben:

| | |
|---|---|
| Diodenstrom: | 12 bis 60 A in 6 Schritten |
| Q-Switch Frequenz: | 9 bis 80 kHz in 8 Schritten |
| Markiergeschwindigkeit: | 200, 800, 1500, 2000 und 3000 mm/s |
| Linienabstand: | 82 $\mu$m |
| Rasterfeldgröße: | 3 · 3 mm |

Folienmuster mit den lasermarkierten Testraster werden auf eine Unterlage von weißem Druckerpapier (DIN 6730, 80 g/m$^2$, 10 Lagen) gelegt und mittels eines Office-Scanners (HP Scanjet 3800, Hewlett-Packard) mit der Auflösung 400 dpi gescannt. Die Scan-Bilder im Bitmap Format (256 Graustufen) können mit einer Bildanalysesoftware ausgewertet werden, z. B. mit Image Analyser 1.30 (MeeSoft, Denmark): Von jedem gescannten Rasterfeld $j$ werden der Mittelwert ($PI^{MW}{}_j$), der maximale Wert ($PI^{Max}{}_j$) und der minimale Wert ($PI^{Min}{}_j$) der Pixelintensitäten $PI_i$ über die Fläche $i$ x $i$ = 50 · 50 Pixel ermittelt. Die Werte der Pixelintensitäten decken den Bereich von 256 Graustufen ab: $PI_i$ = 0 (schwarz), $PI_i$ = 255 (weiß), 0 < $PI_i$ < 255 (grau). Zusätzlich wird auf 4 Stellen (je ca. 200 · 200 Pixel) außerhalb des Testrasters der Mittelwert der Pixelintensitäten der transparenten Folie ($PI^{Folie}$) ermittelt. Der Kontrast des Rasterfeldes j wird dann berechnet wie folgt:

$$\text{Kontrast}(j)\ [\%] = 100 \cdot (PI^{\text{Folie}} - PI^{\text{MW}}{}_j)/256$$

Der maximale Kontrast eines Folienmusters ist der Kontrast des Rasterfeldes mit dem höchsten Kontrastwert. Um eine gute Erkennung des mit Laser markierten Bildes zu erreichen, ist es erwünscht, dass der Kontrast beim Lasermarkieren Werte höher als 50 %, bevorzugt höher als 55 %, erreicht. Gleichzeitig ist es erwünscht, dass der hohe Kontrast bei möglichst hohen Markiergeschwindigkeiten (über 1000 mm/s) erreicht werden kann.

Im Fall, dass die Bedingungen beim Lasermarkieren zur Durchbrennung der Folie führen, wird aufgrund der weißen Unterlage das Vorhandensein von Löchern im Rasterfeld durch eine starke Abweichung des maximalen Werts der Pixelintensität $PI^{Max}{}_j$ ($\to$ weiß) vom Mittelwert $PI^{MW}{}_j$ (grau $\to$ schwarz) erkannt. Solche Rasterfelder werden visuell geprüft und ggf. vor einer weiteren Analyse eliminiert.

**Transparenz**

Die Transparenz wird nach ASTM-D 1003-61 Methode A bestimmt mittels haze-gard plus der Firma BYK-Gardner GmbH, DE.

**Messung des mittleren Partikel-Durchmessers $d_{50}$**

Die Bestimmung des mittleren Durchmessers $d_{50}$ wird mittels Laser auf einem Horiba LA 500 mittels Laserdiffraktion durchgeführt (andere Messgeräte sind z. B. Malvern Master Sizer oder Sympathec Helos, welche das gleiche Messprinzip verwenden). Die Proben werden dazu in eine Küvette mit Wasser gegeben und diese dann in das Messgerät gestellt. Mittels Laser wird die Dispersion abgerastert und aus dem Signal durch Vergleich mit einer Eichkurve die Partikelgrößenverteilung bestimmt. Die Partikelgrößenverteilung ist durch zwei Parameter gekennzeichnet, den Medi-

anwert $d_{50}$ (= Lagemaß für den Mittelwert) und das Streumaß, der sog. SPAN98 (= Maß für die Streuung des Partikeldurchmessers). Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50 %-Ordinatenwertes mit der Summenkurve liefert auf der Abszissenachse den gewünschten $d_{50}$-Wert.

**Mechanische Eigenschaften**

Der E-Modul, die Reißfestigkeit, Reißdehnung und der $F_5$-Wert werden in Längs- und Querrichtung nach ISO 527-1 und 527-3 (Probekörper Typ 2) mit Hilfe eines Zug-Dehnungsmesser (Typ 010 der Fa. Zwick, DE) gemessen.

**Schrumpf**

Der thermische Schrumpf wird an quadratischen Folienmustern mit einer Kantenlänge von 10 cm bestimmt. Die Proben werden genau ausgemessen (Kantenlänge $L_0$), 15 Minuten bei 150 °C in einem Umlufttrockenschrank getempert und anschließend bei Raumtemperatur genau ausgemessen (Kantenlänge L). Der Schrumpf ergibt sich aus der Gleichung

$$\text{Schrumpf } [\%] = 100 \cdot (L_0 - L) / L_0$$

**Ausdehnung**

Die thermische Ausdehnung wird an quadratischen Folienmustern mit einer Kantenlänge von 10 cm bestimmt. Die Proben werden genau ausgemessen (Kantenlänge $L_0$), 15 Minuten bei 100 °C in einem Umlufttrockenschrank getempert und anschließend bei Raumtemperatur genau ausgemessen (Kantenlänge L). Die Ausdehnung ergibt sich aus der Gleichung

$$\text{Ausdehnung } [\%] = 100 \cdot (L - L_0) / L_0$$

**SV-Wert (standard viscosity)**

Die Standardviskosität SV wird, angelehnt an DIN 53 726, bei 25 °C in einer Konzentration von 1 % in Dichloressigsäure (DCE) gemessen. Aus der relativen Viskosität ($\eta_{rel}$) wird der dimensionslose SV-Wert wie folgt ermittelt:

$$\text{SV (DCE)} = (\eta_{rel} - 1) \cdot 1000$$

**Schichtdicken**

Die Folie wird in eine Formmasse eingebettet, mit einem Mikrotom durchgeschnitten, die Oberfläche mit Argon-Plasma angeätzt und die Schnittkante im Elektronmikroskop betrachtet.

**Trübung**

Die Trübung wird nach ASTM-D 1003-61 Methode A bestimmt mittels haze-gard plus der Firma BYK-Gardner GmbH, DE.

**Beispiele**

In den Beispielen kommen die folgenden Rohstoffe zum Einsatz:

PET1 = Polyethylenterephthalatrohstoff mit einem SV-Wert von 820 und einem Isophthalsäuregehalt (als Monomer) von 2 Gew.-% und einem DEG-Gehalt von 1,2 Gew.-% (Diethylenglykolgehalt als Monomer)

PET2 = Polyethylenterephthalatrohstoff mit einem SV-Wert von 800 und einem Isophthalsäuregehalt (als Monomer) von 2 Gew.-% und einem DEG-Gehalt von 1,2 Gew.-% (Diethylenglykolgehalt als Monomer) und 1 Gew.-% Siliziumdioxid der Firma Grace, DE, Typ Sylobloc 44H mit einem $d_{50}$ = 2,55 $\mu$m. Das Sylobloc wurde dem Polyester während der Polykondensation zugegeben.

PET3 = Polyethylenterephthalatrohstoff mit einem SV-Wert von 700 und einem Isophthalsäuregehalt (als Monomer) von 2 Gew.-% und einem DEG-Gehalt von 1,2 Gew.-% (Diethylenglykolgehalt als Monomer) und 10 Gew.-% Cu $(OH)_2 \cdot Cu_3(TO_4)_2$ der Firma Chemische Fabrik Budenheim, DE, Typ Fabulase 322, mit einem $d_{50}$ =2,3 $\mu$m, hergestellt durch Einarbeiten der Fabulase in PET in einem Zweischneckenextruder.

PET4 = Polyethylenterephthalatrohstoff mit einem SV-Wert von 800 und einem Isophthalsäuregehalt (als Monomer) von 22 Gew.-% und einem DEG-Gehalt von 1,0 Gew.-% (Diethylenglykolgehalt als Monomer)

PET5 = Polyethylenterephthalatrohstoff mit einem SV-Wert von 700 und einem Isophthalsäuregehalt (als Monomer) von 2 Gew.-% und einem DEG-Gehalt von 1,2 Gew.-% (Diethylenglykolgehalt als Monomer) und 10 Gew.-% Zinnoxid (SnO) dotiert mit 1 - 5 Gew.-% $Sb_2O_3$ von BASF, DE, Markenname Mark-it, hergestellt durch Einarbeiten des Mark-it in PET in einem Zweischneckenextruder

**Beispiel 1 (erfindungsgemäß)**

Es wurden 3 Polymer-Mischungen in 3 Zweischneckenextrudern bei einer Temperatur von 290 °C aufgeschmolzen:

1. Schicht A = 5 Gew.-% PET2 und 95 Gew.-% PET1
2. Schicht B = 20 Gew.-% PET3 und 10 Gew.-% PET4 und 70 Gew.-% PET1
3. Schicht C = 5 Gew.-% PET2 und 95 Gew.-% PET1

Die Polymermischungen wurden in einem Adapter zusammengeführt und durch eine Breitschlitzdüse auf eine auf 30 °C temperierte Kühlwalze elektrostatisch angelegt. Anschließend wurde die Vorfolie unter folgenden Bedingungen zuerst längs- und dann quergestreckt:

| Längsstreckung | Aufheiztemperatur | 75-115 | °C |
|---|---|---|---|
| | Strecktemperatur | 115 | °C |
| | Längsstreckverhältnis | 3,1 | |
| Querstreckung | Aufheiztemperatur | 100 | °C |
| | Strecktemperatur | 110 | °C |
| | Querstreckverhältnis | 3,8 | |
| Fixierung | Temperatur | 237 - 150 | °C |
| | Dauer | 2 | s |
| | Relaxation in TD bei 200 - 150°C | 8 | % |

Die so erhaltene Folie hatte eine Gesamtdicke von 75 $\mu$m. Die Deckschichten A und C waren beide 12,5 $\mu$m dick. Die Transparenz betrug 82 %, die Trübung 31 %, das E-Modul in MD 3510 N/mm$^2$ und in TD 3755 N/mm$^2$. Der $F_5$-Wert lag in MD bei 85 N/mm$^2$ und in TD bei 95 N/mm$^2$. Der Schrumpf in MD bei 150 °C lag bei 2,1 % und bei 1,0 % in TD. Die Ausdehnung bei 100 °C 1 lag in MD und TD bei 0,1 %. Die lasermarkierte Folie wies den maximalen Kontrast von 56 % bei den Markiergeschwindigkeiten von 200 mm/s und 800 mm/s auf. Der maximale Kontrast bei der Markiergeschwindigkeit von 1500 mm/s betrug 52 %.

**Beispiel 2 (erfindungsgemäß)**

Es wurden 3 Polymer-Mischungen in 3 Zweischneckenextrudern bei einer Temperatur von 290 °C aufgeschmolzen:

1. Schicht A = 5 Gew.-% PET2 und 95 Gew.-% PET4
2. Schicht B = 25 Gew.-% PET3 und 10 Gew.-% PET4 und 70 Gew.-% PET1
3. Schicht C = 5 Gew.-% PET2 und 95 Gew.-% PET4

Die Polymermischungen wurden in einem Adapter zusammengeführt und durch eine Breitschlitzdüse auf eine auf 30 °C temperierte Kühlwalze elektrostatisch angelegt. Anschließend wurde die Vorfolie unter folgenden Bedingungen zuerst längs- und dann quergestreckt:

| Längsstreckung | Aufheiztemperatur | 75-115 | °C |
|---|---|---|---|
| | Strecktemperatur | 115 | °C |
| | Längsstreckverhältnis | 3,1 | |
| Querstreckung | Aufheiztemperatur | 100 | °C |
| | Strecktemperatur | 110 | °C |
| | Querstreckverhältnis | 3,8 | |
| Fixierung | Temperatur | 237 - 150 | °C |
| | Dauer | 2 | s |
| | Relaxation in TD bei 200 - 150 °C | 8 | % |

Die so erhaltene Folie hatte eine Gesamtdicke von 75 $\mu$m. Die Deckschichten A und C waren beide 12,5 $\mu$m dick. Die Transparenz betrug 81 %, die Trübung 35 %, das E-Modul in MD 3400 N/mm$^2$ und in TD 3620 N/mm$^2$. Der $F_5$-Wert lag in MD bei 82 N/mm$^2$ und in TD bei 93 N/mm$^2$. Der Schrumpf in MD bei 150 °C lag bei 3,2 % und bei 1,4 % in TD. Die Ausdehnung bei 100 °C lag in MD und TD bei 0,1 %. Die Folie war beidseitig siegelfähig. Sie siegelte z. B. gegen PET bei einer Temperatur von 120 °C und einem Druck von 1 bar. Die lasermarkierte Folie wies den maximalen Kontrast von 58 % bei den Markiergeschwindigkeiten von 200 mm/s und 800 mm/s auf. Der maximale Kontrast bei der Markiergeschwindigkeit von 1500 mm/s betrug 58 %.

**Vergleichsbeispiel 1**

Es wurden 3 Polymer-Mischungen in 3 Zweischneckenextrudern bei einer Temperatur von 290 °C aufgeschmolzen:

1. Schicht A = 5 Gew.-% PET2 und 95 Gew.-% PET1
2. Schicht B = 20 Gew.-% PET5 und 10 Gew.-% PET4 und 70 Gew.-% PET1
3. Schicht C = 5 Gew.-% PET2 und 95 Gew.-% PET1

Die Polymermischungen wurden in einem Adapter zusammengeführt und durch eine Breitschlitzdüse auf eine auf 30 °C temperierte Kühlwalze elektrostatisch angelegt. Anschließend wurde die Vorfolie unter folgenden Bedingungen zuerst längs- und dann quergestreckt:

| Längsstreckung | Aufheiztemperatur | 75-115 | °C |
|---|---|---|---|
| | Strecktemperatur | 115 | °C |
| | Längsstreckverhältnis | 3,1 | |
| Querstreckung | Aufheiztemperatur | 100 | °C |
| | Strecktemperatur | 110 | °C |

(fortgesetzt)

|  | Querstreckverhältnis | 3,8 |  |
|---|---|---|---|
| Fixierung | Temperatur | 237 - 150 | °C |
|  | Dauer | 2 | s |
|  | Relaxation in TD bei 200 - 150 °C | 8 | % |

Die so erhaltene Folie hatte eine Gesamtdicke von 75 $\mu$m. Die Deckschichten A und C waren beide 12,5 um dick. Die Transparenz betrug 73 %, die Trübung 40 %, das E-Modul in MD 3570 N/mm$^2$ und in TD 3820 N/mm$^2$. Der $F_5$- Wert lag in MD bei 86 N/mm$^2$ und in TD bei 97 N/mm$^2$. Der Schrumpf in MD bei 150 °C lag bei 1,9 % und bei 1,1 % in TD. Die Ausdehnung bei 100 °C lag in MD und TD bei 0,1 %. Die lasermarkierte Folie wies den maximalen Kontrast von 40 bis 42 % bei den Markiergeschwindigkeiten von 200 mm/s und 800 mm/s auf. Der maximale Kontrast bei der Markiergeschwindigkeit von 1500 mm/s betrug 31 %.

**Vergleichsbeispiel 2**

Es wurden 3 Polymer-Mischungen in 3 Zweischneckenextrudern bei einer Temperatur von 290 °C aufgeschmolzen:

1. Schicht A = 5 Gew.-% PET2 und 95 Gew.-% PET1
2. Schicht B = 2 Gew.-% PET3 und 10 Gew.-% PET4 und 88 Gew.-% PET1
3. Schicht C = 5 Gew.-% PET2 und 95 Gew.-% PET1

Die Polymermischungen wurden in einem Adapter zusammeneführt und durch eine Breitschlitzdüse auf eine auf 30 °C temperierte Kühlwalze elektrostatisch angelegt. Anschließend wurde die Vorfolie unter folgenden Bedingungen zuerst längs- und dann quergestreckt:

| Längsstreckung | Aufheiztemperatur | 75-115 | °C |
|---|---|---|---|
|  | Strecktemperatur | 115 | °C |
|  | Längsstreckverhältnis | 3,1 |  |
| Querstreckung | Aufheiztemperatur | 100 | °C |
|  | Strecktemperatur | 110 | °C |
|  | Querstreckverhältnis | 3,8 |  |
| Fixierung | Temperatur | 237 - 150 | °C |
|  | Dauer | 2 | s |
|  | Relaxation in TD bei 200 - 150 °C | 8 | % |

Die so erhaltene Folie hatte eine Gesamtdicke von 75 $\mu$m. Die Deckschichten A und C waren beide 12,5 $\mu$m dick. Die Transparenz betrug 86 %, die Trübung 5 %, das E-Modul in MD 3515 N/mm$^2$ und in TD 3790 N/mm$^2$. Der $F_5$-Wert lag in MD bei 87 N/mm$^2$ und in TD bei 92 N/mm$^2$. Der Schrumpf in MD bei 150 °C lag bei 2,1 % und bei 1,1 % in TD. Die Ausdehnung bei 100 °C lag in MD und TD bei 0,1 %. Die lasermarkierte Folie wies den maximalen Kontrast von 33 % bei der Markiergeschwindigkeit von 800 mm/s auf. Der maximale Kontrast bei der Markiergeschwindigkeit von 1500 mm/s betrug 28 %.

**Patentansprüche**

1.    Lasermarkierbare, transparente, coextrudierte, biaxial orientierte Polyesterfolie mit einer Basisschicht (B) und mindestens einer Deckschicht (A), **dadurch gekennzeichnet, dass** die Folie eine Transparenz von größer/gleich 75 % (gemessen nach ASTM-D 1003-61 Methode A) besitzt und dass die Basisschicht (B) Kupfer(II)hydroxidphosphat als Laserenergie absorbierendes Pigment in einer Menge von 0,2 bis 6 Gew.-% enthält.

**2.** Polyesterfolie nach Anspruch 1, **dadurch gekennzeichnet, dass** die Folie Kupfer(II)hydroxidphosphat enthält, das die allgemeine Summenformel:

$$Cu(II)_x(OH)_y(PO_z)_n \qquad \text{(Formel I)}$$

hat, wobei
x zwischen 2 und 6 liegt und bevorzugt 4 ist,
y zwischen 1 und 4 liegt und bevorzugt 2 ist,
z zwischen 3 und 4 liegt und bevorzugt 4 ist und
n zwischen 1 und 4 liegt und bevorzugt 2 ist.

**3.** Polyesterfolie nach Anspruch 1 oder 2, **dadurch gekennzeichnet, dass** neben der Basisschicht (B) mindestens eine weitere, von (B) verschiedene Schicht Kupfer(II)hydroxidphosphat enthält.

**4.** Polyesterfolie nach einem der Ansprüche 1 bis 3, **dadurch gekennzeichnet, dass** Schicht (A) kein Kupfer(II)hydroxidphosphat enthält.

**5.** Polyesterfolie nach einem der Ansprüche 1 bis 4, **dadurch gekennzeichnet, dass** die Folie das Kupfer(II)hydroxidphosphat in einer Menge enthält, die abhängig ist von
der Gesamtdicke aller Kupfer(II)hydroxidphosphat enthaltenden Folienschichten.

**6.** Polyesterfolie nach einem der Ansprüche 1 bis 5, **dadurch gekennzeichnet, dass** die normierte Gesamtmenge an Kupfer(II)hydroxidphosphat in Gew.-% $\cdot$ $(\mu m)^a$ in allen Kupfer(II)hydroxidphosphat enthaltenden Folienschichten sich wie folgt berechnet:

$$C_{nl} = C_l \cdot d^a \qquad \text{Gleichung 1}$$

mit

$d$ = Gesamtschichtdicke aller Folienschichten (Einheit: $\mu m$), die eine Verbindung der Formel I enthalten
$a$ = empirischer Exponent: $a = 0{,}6864$
$C_l$ = Gesamtkonzentration aller Verbindungen der Formel I in den Verbindungen der Formel I enthaltenden Schichten der Folie in der Einheit Gew.-%
$C_{nl}$ = normierte Gesamtkonzentration aller Verbindungen der Formel I in den Verbindungen der Formel I enthaltenden Schichten der Folie in der Einheit Gew.-% $\cdot$ $(\mu m)^a$.

**7.** Polyesterfolie nach Anspruch 6, **dadurch gekennzeichnet, dass** die Untergrenze von $C_{nl}$ bei größer/gleich 4 Gew.-% $\cdot$ $(\mu m)^a$, bevorzugt bei größer/gleich 8 Gew.-% . $\cdot$ $(\mu m)^a$, besonders bevorzugt bei größer/gleich 14 Gew.-% $\cdot$ $(\mu m)^a$, und idealerweise bei größer/gleich 22 Gew.-% $\cdot$ $(\mu m)^a$, liegt.

**8.** Polyesterfolie nach Anspruch 6 oder 7, **dadurch gekennzeichnet, dass** die Obergrenze von $C_{nl}$ bei kleiner/gleich 75 Gew.-% $\cdot$ $(\mu m)^a$, bevorzugt bei kleiner/gleich 55 Gew.-% $\cdot$ $(\mu m)^a$, besonders bevorzugt bei kleiner/gleich 42 Gew.-% $\cdot$ $(\mu m)^a$ und idealerweise bei kleiner/gleich 35 Gew.-% $\cdot$ $(\mu m)^a$, liegt.

**9.** Folie nach einem der Ansprüche 1 bis 8, **dadurch gekennzeichnet, dass** sie Verbindungen der Formel I in Form von Partikeln enthält, die eine mittlere Teilchengröße $d_{50}$ von kleiner 10 $\mu m$, bevorzugt von kleiner 7 $\mu m$, besonders bevorzugt von kleiner 4 $\mu m$, besitzen, gemessen mittels Laserdiffraktion.

**10.** Folie nach einem der Ansprüche 1 bis 9, **dadurch gekennzeichnet, dass** mindestens die Deckschicht (A) siegelfähig ist.

**11.** Folie nach einem der Ansprüche 1 bis 10, **dadurch gekennzeichnet, dass** sie Rotfarbstoff in einer Menge von kleiner als 0,1 Gew.-% enthält.

**12.** Verfahren zur Herstellung einer Folie nach Anspruch 1, wobei die der Folie entsprechenden Schmelzen durch eine Flachdüse coextrudiert werden, die so erhaltene coextrudierte Folie zur Verfestigung auf einer oder mehreren gekühlten Walze/n angelegt wird, die Folie anschließend biaxial gestreckt (orientiert), die biaxial gestreckte Folie thermofixiert, abgekühlt und aufgewickelt wird, **dadurch gekennzeichnet, dass** die Basisschicht (B) der Folie Kupfer(II)hydroxidphosphat als Laserenergie absorbierendes Pigment in einer Menge von 0,2 bis 6 Gew.-% enthält.

**13.** Verwendung einer Polyesterfolie nach Anspruch 1 zur Herstellung von Identitätskarten.

**14.** Verwendung einer Polyesterfolie nach Anspruch 1 im Konterdruck.

**Claims**

**1.** A laser-markable, transparent, coextruded, biaxially oriented polyester film with a base layer (B) and with at least one outer layer (A), the transparency of which is greater than or equal to 75 % (measured to ASTM D1003-61, method A), and the base layer (B) of which comprises an amount of from 0.2 to 6 % by weight of copper(II) hydroxide phosphate as pigment that absorbs laser energy.

**2.** The polyester film as claimed in claim 1, which comprises copper(II) hydroxide phosphate of which the general molecular formula is:

$$Cu(II)_x(OH)_y(PO_z)_n \qquad \text{(formula I)}$$

where
x is from 2 to 6 and is preferably 4,
y is from 1 to 4 and is preferably 2,
z is from 3 to 4 and is preferably 4, and
n is from 1 to 4 and is preferably 2.

**3.** The polyester film as claimed in claim 1 or 2, wherein not only the base layer (B) but also at least one further layer different from (B) comprises copper(II) hydroxide phosphate.

**4.** The polyester film as claimed in any of claims 1 to 3, wherein the layer (A) comprises no copper(II) hydroxide phosphate.

**5.** The polyester film as claimed in any of claims 1 to 4, in which the amount present of the copper(II) hydroxide phosphate depends on the total thickness of all of the film layers comprising copper(II) hydroxide phosphate.

**6.** The polyester film as claimed in any of claims 1 to 5, wherein the standardized total amount of copper(II) hydroxide phosphate in % by weight $\cdot (\mu m)^a$ in all film layers comprising copper(II) hydroxide phosphate is calculated as follows:

$$C_{nI} = C_I \bullet d^a \qquad \text{equation 1}$$

where

$d$ = total layer thickness (unit: $\mu m$) of all of the film layers which comprise a compound of the formula I
$a$ = empirical exponent: $a$ = 0.6864
$C_I$ = total concentration in the unit % by weight of all of the compounds of the formula I in those layers of the film that comprise compounds of the formula I
$C_{nI}$ = standardized total concentration in the unit % by weight $\cdot (\mu m)^a$ of all of the compounds of the formula I in those layers of the film that comprise compounds of the formula I.

**7.** The polyester film as claimed in claim 6, wherein the lower limit of $C_{nI}$ is greater than or equal to 4 % by weight $\cdot (\mu m)^a$, preferably greater than or equal to 8 % by weight $\cdot (\mu m)^a$, particularly preferably greater than or equal to 14 % by weight $\cdot (\mu m)^a$, and ideally greater than or equal to 22 % by weight $\cdot (\mu m)^a$.

**8.** The polyester film as claimed in claim 6 or 7, wherein the upper limit of $C_{nI}$ is less than or equal to 75 % by weight

• (μm)$^a$, preferably less than or equal to 55 % by weight • (μm)$^a$, particularly preferably less than or equal to 42 % by weight • (μm)$^a$, and ideally less than or equal to 35 % by weight • (μm)$^a$.

9. The film as claimed in any of claims 1 to 8, which comprises compounds of the formula I in the form of particles having a median particle size $d_{50}$ smaller than 10 μm, preferably smaller than 7 μm, particularly preferably smaller than 4 μm, measured by means of laser diffraction.

10. The film as claimed in any of claims 1 to 9, wherein at least the outer layer (A) is sealable.

11. The film as claimed in any of claims 1 to 10, which comprises an amount smaller than 0.1 % by weight of red dye.

12. A process for producing a film as claimed in claim 1, where the melts corresponding to the film are coextruded through a flat-film die, the resultant coextruded film is laid on one or more cooled rolls for solidification, the film is then biaxially stretched (oriented), the biaxially stretched film is heat-set, cooled, and wound up, which comprises the presence, in the base layer (B) of the film, of an amount of from 0.2 to 6 % by weight of copper(II) hydroxide phosphate as pigment that absorbs laser energy.

13. The use of a polyester film as claimed in claim 1 for producing identity cards.

14. The use of a polyester film as claimed in claim 1 in the reverse-printing process.


**Revendications**

1. Feuille de polyester transparente, co-extrudée, orientée biaxialement et pouvant être marquée au laser, avec une couche de base (B) et au moins une couche de recouvrement (A), **caractérisée en ce que** la feuille possède une transparence supérieure ou égale à 75 % (mesurée selon la norme ASTM-D 1003-61, méthode A) et **en ce que** la couche de base (B) contient un système d'hydroxyde et de phosphate de cuivre(II) sous la forme d'un pigment absorbant l'énergie laser en quantité de 0,2 à 6 % en poids.

2. Feuille de polyester selon la revendication 1, **caractérisée en ce que** la feuille contient le système d'hydroxyde et de phosphate de cuivre(II) qui présente la formule brute générale suivante :

$$Cu(II)_x(OH)_y(PO_z)_n \qquad \text{(formule I)}$$

dans laquelle
x se situe entre 2 et 6 et de préférence vaut 4,
y se situe entre 1 et 4 et de préférence vaut 2,
z se situe entre 3 et 4 et de préférence vaut 4 et n se situe entre 1 et 4 et de préférence vaut 2.

3. Feuille de polyester selon la revendication 1 ou 2, **caractérisée en ce que**, outre la couche de base (B), au moins une autre couche, différente de la couche (B) , contient le système d'hydroxyde et de phosphate de cuivre(II).

4. Feuille de polyester selon l'une quelconque des revendications 1 à 3, **caractérisée en ce que** la couche (A) ne contient pas le système d'hydroxyde et de phosphate de cuivre(II).

5. Feuille de polyester selon l'une quelconque des revendications 1 à 4, **caractérisée en ce que** la feuille contient le système d'hydroxyde et de phosphate de cuivre (II) en une quantité qui dépend de l'épaisseur totale de toutes les couches de la feuille contenant le système d'hydroxyde et de phosphate de cuivre (II) .

6. Feuille de polyester selon l'une quelconque des revendications 1 à 5, **caractérisée en ce que** la quantité totale normalisée de système d'hydroxyde et de phosphate de cuivre (II) en % en poids • (μm)$^a$ dans toutes les couches de la feuille contenant le système d'hydroxyde et de phosphate de cuivre(II) se calcule de la manière suivante :

$$C_{n1} = C_1 \cdot d^a \qquad \qquad \text{Equation 1}$$

avec

d = épaisseur de couche totale de toutes les couches de la feuille (unité : $\mu$m), qui contiennent un composé de formule I

a = exposant empirique : a = 0,6864

$C_1$ = concentration totale de tous les composés de formule I dans les couches de la feuille contenant des composés de formule I, exprimée en % en poids

$C_{nl}$ = concentration totale normalisée de tous les composés de formule I dans les couches de la feuille contenant des composés de formule I, exprimée dans l'unité % en poids • $(\mu m)^a$.

7. Feuille de polyester selon la revendication 6, **caractérisée en ce que** la limite inférieur de $C_{nl}$ se situe à une valeur supérieure ou égale à 4 % en poids • $(\mu m)^a$, de préférence supérieure ou égale à 8 % en poids • $(\mu m)^a$, mieux encore supérieure ou égale à 14 % en poids • $(\mu m)^a$ et, idéalement, supérieure ou égale à 22 % en poids • $(\mu m)^a$.

8. Feuille de polyester selon la revendication 6 ou 7, **caractérisée en ce que** la limite supérieure de $C_{nl}$ se situe à une valeur inférieure ou égale à 75 % en poids • $(\mu m)^a$, de préférence inférieure ou égale à 55 % en poids • $(\mu m)^a$, mieux encore inférieure ou égale à 42 % en poids • $(\mu m)^a$ et, idéalement, inférieure ou égale à 35 % en poids • $(\mu m)^a$.

9. Feuille selon l'une quelconque des revendications 1 à 8, **caractérisée en ce qu'**elle contient des composés de formule I sous la forme de particules, qui présentent une taille particulaire moyenne $d_{50}$ inférieure à 10 $\mu$m, de préférence inférieure à 7 $\mu$m, mieux encore, inférieure à 4 $\mu$m, mesurée par diffraction laser.

10. Feuille selon l'une quelconque des revendications 1 à 9, **caractérisée en ce qu'**au moins la couche de recouvrement (A) est scellable.

11. Feuille selon l'une quelconque des revendications 1 à 10, **caractérisée en ce qu'**elle contient un colorant rouge en quantité inférieure à 0,1 % en poids.

12. Procédé pour la fabrication d'une feuille selon la revendication 1, dans lequel les masses fondues correspondant à la feuille sont co-extrudées à travers une filière plate, la feuille co-extrudée ainsi obtenue est appliquée à des fins de solidification sur un ou plusieurs cylindres refroidis, la feuille est ensuite étirée (orientée) biaxialement, la feuille étirée biaxialement est soumise à une thermofixation, puis est refroidie et enroulée, **caractérisé en ce que** la couche de base (B) de la feuille contient le système d'hydroxyde et de phosphate de cuivre(II) comme pigment absorbant l'énergie laser en quantité de 0,2 à 6 % en poids.

13. Utilisation d'une feuille de polyester selon la revendication 1, pour la fabrication de cartes d'identité.

14. Utilisation d'une feuille de polyester selon la revendication 1, dans l'impression au verso.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1920918 A
- EP 0764683 A
- US 20090061138 A
- US 20090061137 A
- WO 02070606 A
- EP 1529799 A
- EP 1380414 A
- EP 0849075 A